# EUROPÄISCHE PATENTSCHRIFT

(11) **EP 3 274 602 B1**
(45) Veröffentlichungstag und Bekanntmachung des Hinweises auf die Patenterteilung: **29.08.2018**
(21) Anmeldenummer: 17709678.1
(22) Anmeldetag: 09.03.2017
(51) Int. Cl.: F16C 33/20

(54) **METALL/KUNSTSTOFF-GLEITLAGERVERBUNDWERKSTOFF UND HIERAUS HERGESTELLTES GLEITLAGERELEMENT**
METAL/PLASTIC COMPOSITE SLIDING BEARING MATERIAL AND SLIDING BEARING ELEMENT PRODUCED THEREFROM
MATÉRIAU COMPOSITE POUR PALIER LISSE EN MÉTAL/PLASTIQUE ET ÉLÉMENT DE PALIER LISSE FABRIQUÉ À PARTIR DE CE MATÉRIAU

(30) Priorität: 11.03.2016 DE 102016104509
(43) Veröffentlichungstag der Anmeldung: 31.01.2018
(73) Patentinhaber: KS Gleitlager GmbH, 68789 St. Leon-Rot (DE)
(72) Erfinder: TAIPALUS, Riitta, 67117 Limburgerhof (DE); REINICKE, Rolf, 76669 Bad Schoenborn (DE)
(74) Vertreter: DREISS Patentanwälte PartG mbB
(86) Internationale Anmeldenummer: PCT/EP2017/055546
(87) Internationale Veröffentlichungsnummer: WO 2017/153523

(56) Entgegenhaltungen:
- WO-A1-03/103955
- DE-A1- 10 226 266
- DE-A1-102012 208 346
- US-A- 4 115 283
- US-A1- 2014 100 144

## Beschreibung

Die Erfindung betrifft einen Metall/Kunststoff-Gleitlagerverbundwerkstoff zur Herstellung von Gleitlagerelementen für geschmierte Anwendungen, also nicht für Trockenlauf oder für Gleitlagerelemente mit lediglich Initialschmierung, mit einer metallischen Stützschicht, insbesondere aus Stahl, und einer in gleitendem Kontakt mit einem Gleitpartner stehenden Gleitschicht mit einem Gleitschichtmaterial auf Basis eines fluorfreien Thermoplasten, insbesondere PAEK (Polyaryletherketone) oder PEEK (Polyetheretherketone), und mit die tribologischen Eigenschaften verbessernden Füllstoffen sowie ein hieraus hergestelltes Gleitlagerelement. Wenn vorstehend von geschmierten Anwendungen die Rede ist, so ist dies in Abgrenzung zu für Trockenlauf vorgesehenen Gleitlagerelementen oder zu Gleitlagerelementen, die eine einmalige Initialschmierung erhalten oder aufweisen, zu sehen. Insbesondere bezieht sich die Erfindung auf Gleitlagerverbundwerkstoffe zur Herstellung von Gleitlagerelementen für Einspritzpumpen für hochaufgeladende Verbrennungsmotoren bei Kraftfahrzeugen.

DE 10 2006015997 A1 offenbart und lehrt einen verschleißfesten Werkstoff umfassend eine thermoplastische Matrix aus PEEK, mit einem Verstärkungsstoff, insbesondere ausgewählt aus Kohlenstofffasern, Glasfasern, Polyamidfasern, insbesondere Aramidfasern, Mineralfasern oder Mischungen hieraus, und mit einem partikulären Füllstoff, insbesondere in Form von Silikat-, Metall-, Glas-, Mineralstoff- und Kunststoffpartikeln. Weiter genannt sind Eisenaluminium-silikatpartikel und Natriumaluminium-silikatpartikel. Das Ausführungsbeispiel verwendet Eisenoxidpartikel.

Weitere Gleitlagerverbundwerkstoffe gemäß dem Stand der Technik sind bspw. in DE 10 2012 208 346 A1, US 2014/0100144 A1, DE 102 26 266 A1 und US 4 115 283 A1 gezeigt. Ein durch die Anmelderin bekannt gewordener gattungsgemäßer Gleitlagerverbundwerkstoff geht aus WO 03/103955 A1 hervor und umfasst ein Gleitschichtmaterial auf Basis von PEEK und 10 Gew.-% Kohlenstofffasern, 10 Gew.-% Graphit, 10 Gew.-% TiO₂ und 10 Gew.-% ZnS. Dieser Gleitlagerverbundwerkstoff und hieraus hergestellte Gleitlagerelemente haben eine sehr gute Verschleißfestigkeit. Hiervon ausgehend liegt der vorliegenden Erfindung die Aufgabe zugrunde, diesen hochfesten Werkstoff im Hinblick auf sein Reibverhalten und seine Anpassungsfähigkeit weiter zu verbessern. Insbesondere soll sicher vermieden werden, dass bei geringen Lagerspielen bei Dieseleinspritzpumpen und demzufolge bei vergleichsweise geringem Durchfluss an Diesel eine Fressneigung auftritt. Weiter soll der Werkstoff hinsichtlich seines Umformungsverhaltens verbessert werden.

Diese Aufgabe wird bei einem Gleitlagerverbundwerkstoff der genannten Art erfindungsgemäß dadurch gelöst, dass das Gleitschichtmaterial als Füllstoffe zu 1 - 40 Gew.-% Aluminiumsilikat in Form von im wesentlichen sphärischen Partikeln und zu 5 - 40 Gew.-% einen Festschmierstoff, insbesondere in Form eines oder mehrerer der nachfolgenden Stoffe Zinksulfid, Wolframdisulfid, Bariumsulfat, Kaolin, Calciumfluorid, Graphit, Kreide oder Talk, umfasst und frei von faserförmigen Zusatzstoffen und von festigkeitserhöhenden Hartstoffen, die eine Mohshärte von größer als 5 aufweisen, ausgebildet ist. Dies bedeutet, dass das Gleitschichtmaterial frei von Kohlenstofffasern, Aramidfasern und von Hartstoffen wie Carbiden, kubischen Nitriden und dergleichen ist.

Mit der vorliegenden Erfindung wurde überraschenderweise festgestellt, dass bei hochbelastbaren Gleitlagerverbundwerkstoffen, insbesondere für Gleitlagerelemente bei Kraftstoffeinspritzpumpen, die traditionell eingesetzten Kohlenstofffasern auch Nachteile mit sich bringen. Insbesondere bei einer nicht optimal ausgeführten mechanischen Bearbeitung der Gleitfläche resultiert eine Oberfläche, die eine erhöhte Fressneigung aufweist. Es hat sich weiter gezeigt, dass durch Weglassen von typischerweise verwandten Hartstoffen die Einbettfähigkeit und das Reibverhalten verbessert werden, sofern ein typischer Festschmierstoff zusätzlich zu sphärischen Aluminiumsilikatpartikeln eingesetzt wird. Gerade die Kombination von sphärischen Aluminiumsilikatpartikeln mit einem Festschmierstoff führt zu einem insgesamt hinsichtlich der vorstehenden Aspekte verbesserten Gleitlagerverbundwerkstoff.

Weiter wird vorgeschlagen, dass das Gleitschichtmaterial zu wenigstens 8 Gew.-%, insbesondere zu wenigstens 10 Gew.-%, insbesondere zu wenigstens 12 Gew.-%, insbesondere zu wenigstens 15 Gew.-%, insbesondere zu höchstens 30 Gew.-%, insbesondere zu höchstens 20 Gew.-% Festschmierstoff umfasst. Der Festschmierstoff soll in Weiterbildung der Erfindung eine Mohshärte von höchstens 4 aufweisen.

Es erweist sich als vorteilhaft, wenn der Festschmierstoff von einem oder mehreren der nachfolgenden Stoffe Zinksulfid, Wolframdisulfid, Bariumsulfat, Kaolin, Calciumfluorid, Graphit, Kreide oder Talk gebildet ist.

Weiter erweist sich als vorteilhaft, wenn das Gleitschichtmaterial in einer auf der metallischen Stützschicht ausgebildeten porösen Trägerschicht, insbesondere in einer aus metallischen Partikeln aufgesinterten Trägerschicht verankert ist.

Alternativ hierzu ist auch denkbar, dass das Gleitschichtmaterial in einer mikrostrukturiert ausgebildeten Oberfläche der metallischen Stützschicht verankert ist oder dass das Gleitschichtmaterial mittels einer klebenden Haftvermittlungsschicht auf die metallische Stützschicht aufgeklebt ist.

Es kann sich weiter als vorteilhaft erweisen, dass das Gleitschichtmaterial zu wenigstens 5 Gew.-%, insbesondere zu wenigstens 10 Gew.-%, insbesondere zu höchstens 30 Gew.-%, insbesondere zu höchstens 25 Gew.-%, insbesondere zu höchstens 20 Gew.-% Aluminiumsilikat umfasst.

In Weiterbildung der Erfindung erweist sich als besonders vorteilhaft, wenn das Aluminiumsilikat zu wenigstens 4 Gew.-%, insbesondere zu wenigstens 5 Gew.-%, insbesondere zu wenigstens 6 Gew.-% Kalziumoxid umfasst, und zwar bezogen auf die Masse des Aluminiumsilikats.

Nach einer besonders bevorzugten Ausführungsform des Gleitlagerverbundwerkstoffs umfasst das Aluminiumsilikat zu 62 - 68 Gew.-% SiO₂, zu 17 - 21 Gew.-% Al₂O₃ und zu 5 - 8 Gew.-% CaO.

Es wird weiter vorgeschlagen, dass die Partikelgröße der im Wesentlichen sphärischen Aluminiumsilikat Partikel einen D50-Wert von höchstens 20 µm, insbesondere von höchstens 15 µm, insbesondere von höchstens 10 µm aufweist, insbesondere zwischen 1 und 10 µm, insbesondere zwischen 2 und 10 µm aufweist. Weiter wird vorgeschlagen, dass die Partikelgröße der im Wesentlichen sphärischen Aluminiumsilikat Partikel einen D90-Wert von höchstens 100 pm, insbesondere von höchstens 80 µm, insbesondere von höchstens 60 µm aufweist. Der 50-Wert (D90-Wert) der Partikelgröße ist diejenige Partikelgröße, bezüglich derer 50 Masse-% (90 Masse-%) des Aluminiumsilikats eine kleinere und 50 Masse-% (10 Masse-%) des Aluminiumsilikats eine größere Partikelgröße aufweisen.

Der Gleitlagerverbundwerkstoff ist weiter insbesondere so ausgebildet, dass die Schichtdicke der metallischen Stützschicht 0,5 - 5 mm beträgt, dass die Schichtdicke der porösen Trägerschicht wenigstens 0,05 mm, insbesondere wenigstens 0,1 mm, insbesondere wenigstens 0,2 mm und höchstens 0,6 mm, insbesondere höchstens 0,5 mm beträgt, und dass der Überstand des Gleitschichtmaterials über die poröse Trägerschicht wenigstens 30 µm, insbesondere wenigstens 50 µm, insbesondere wenigstens 100 µm und höchstens 600 µm, insbesondere höchstens 500 µm, insbesondere höchstens 400 µm beträgt.

Das Gleitschichtmaterial ist vorzugsweise auf Basis von PAEK, insbesondere PEEK, als fluorfreier Thermoplast ausgebildet. In diesem Zusammenhang sei erwähnt, dass die Bezeichnung "auf Basis von PAEK oder PEEK ausgebildet" nicht ausschließt, dass neben PAEK oder PEEK noch andere Thermoplaste, jedoch zusammen höchstens bis 20 Gew.-%, insbesondere bis höchstens 10 Gew.-%, insbesondere bis höchstens 5 Gew.-% des PAEK oder PEEK Anteils vorhanden sind. Das Gleitschichtmaterial ist vorzugsweise PTFE-frei ausgebildet.

Bei einem bevorzugten Gleitlagerverbundwerkstoff ist das Gleitschichtmaterial auf Basis von PAEK, insbesondere von PEEK als fluorfreier Thermoplast ausgebildet und umfasst zu 10 - 20 Gew.-%, insbesondere zu 12 - 18 Gew.-%, insbesondere zu 13 - 17 Gew.-%, insbesondere zu 14 - 16 Gew.-% Aluminiumsilikat und zu 13 - 17 Gew.-% Festschmierstoff in Form eines oder mehrerer der nachfolgenden Stoffe Zinksulfid, Wolframdisulfid, Bariumsulfat, Kaolin, Calciumsulfid, Graphit, Kreide oder Talk.

Die vorliegende Erfindung betrifft auch die Verwendung eines vorstehend beschriebenen Metall/Kunststoff-Gleitlagerverbundwerkstoffs zur Herstellung von Gleitlagerelementen für Einspritzpumpen für hochaufgeladende Verbrennungsmotoren, insbesondere für Common Rail Einspritzpumpen, bei Kraftfahrzeugen.

Ferner betrifft die Erfindung ein Gleitlagerelement für eine Einspritzpumpe für einen hochaufladenden Verbrennungsmotor, insbesondere für eine Common Rail Einspritzpumpe, bei Kraftfahrzeugen, hergestellt aus einem Metall/Kunststoff-Gleitlagerverbundwerkstoff der vorstehend beschriebenen Art bzw. nach einem oder mehreren der Ansprüche 1-16.

Außerdem wird Schutz in Anspruch genommen für die Verwendung eines Gleitlagerelements hergestellt aus einem Metall/Kunststoff-Gleitlagerverbundwerkstoff nach einem oder mehreren der Ansprüche 1-16 zur Lagerung der Antriebswelle einer Einspritzpumpe für hochaufgeladende Verbrennungsmotoren, insbesondere einer Common Rail Einspritzpumpe, oder zur Lagerung von Wellen oder Hebeln bei Kraftfahrzeuggetrieben, -bremsen oder bei Hydromotoren.

Einzelheiten, Merkmale und Vorteile der Erfindung ergeben sich aus den beigefügten Ansprüchen und aus der zeichnerischen Darstellung und nachfolgenden Beschreibung bevorzugter Ausführungsformen der Erfindung. In der Zeichnung zeigt:
Figur 1 eine schematische Schnittansicht eines erfindungsgemäßen Gleitlagerverbundwerkstoffs;
Figur 2 Messergebnisse zur Verschleißfestigkeit von Vergleichswerkstoffen und des erfindungsgemäßen Werkstoffs;
Figur 3 Messergebnisse zum Anfahrdrehmoment von Vergleichswerkstoffen und des erfindungsgemäßen Werkstoffs;
Figur 4 Messergebnisse zum Drehmoment bei 100 1/min von Vergleichswerkstoffen und des erfindungsgemäßen Werkstoffs;
Figur 5 eine schematische Darstellung eines Prüfaufbaus.

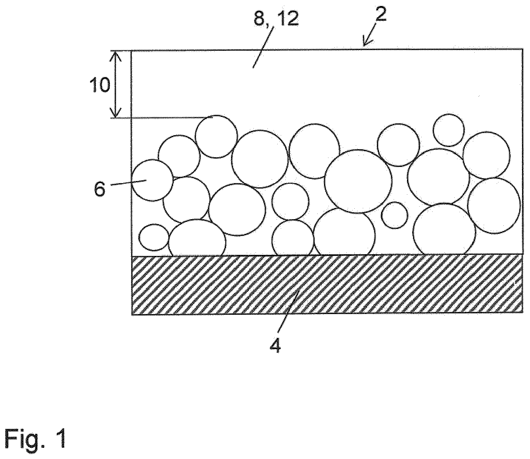

Figur 1 zeigt eine erfindungsgemäße Schnittansicht eines insgesamt mit dem Bezugszeichen 2 bezeichneten Gleitlagerverbundwerkstoffs. Er umfasst eine metallische Stützschicht 4, vorzugsweise und typischerweise aus Stahl. Darauf ist im beispielhaft und bevorzugt dargestellten Fall eine poröse Trägerschicht 6 in Form aufgesinterter Bronzepartikel einer beispielhaften Zusammensetzung Cu90Sn10 aufgesintert. In diese dreidimensional poröse Trägerschicht 6 ist ein Gleitschichtmaterial 8 auf Basis eines fluorfreien Thermoplasten, insbesondere und vorzugsweise PEEK, eingebracht, und zwar derart, dass das Gleitschichtmaterial 8 einen Überstand 10 über die zuoberst liegenden Partikel der Trägerschicht 6 wie oben angegeben bildet. Das Gleitschichtmaterial 8 bildet also eine dem Gleitpartner zugewandte Gleitschicht 12. Erfindungsgemäß umfasst das Gleitschichtmaterial 1 bis 40 Gew.-% Aluminiumsilikat in Form von im Wesentlichen sphärischen Partikeln, auch als Flugasche bezeichnet, und 5 bis 40 Gew.-% eines Festschmierstoffs der im allgemeinen Teil der Patentanmeldung beschriebenen Art, jeweils bezogen auf die Gesamtmasse des Gleitschichtmaterials 8 einschließlich seiner Füllstoffe. Das Gleitschichtmaterial 8 ist ferner erfindungsgemäß frei von faserförmigen Zusatzstoffen und von festigkeitserhöhenden Hartstoffen, die eine Mohshärte von > 5 aufweisen. Es wäre auch denkbar, dass das Gleitschichtmaterial 8 nicht in einer separat aufgebrachten Trägerschicht 6, sondern in einer mikrostrukturiert ausgebildeten Oberfläche der metallischen Stützschicht 4 verankert ist oder mittels einer klebenden Haftvermittlungsschicht auf die metallische Stützschicht 4 aufgeklebt ist.

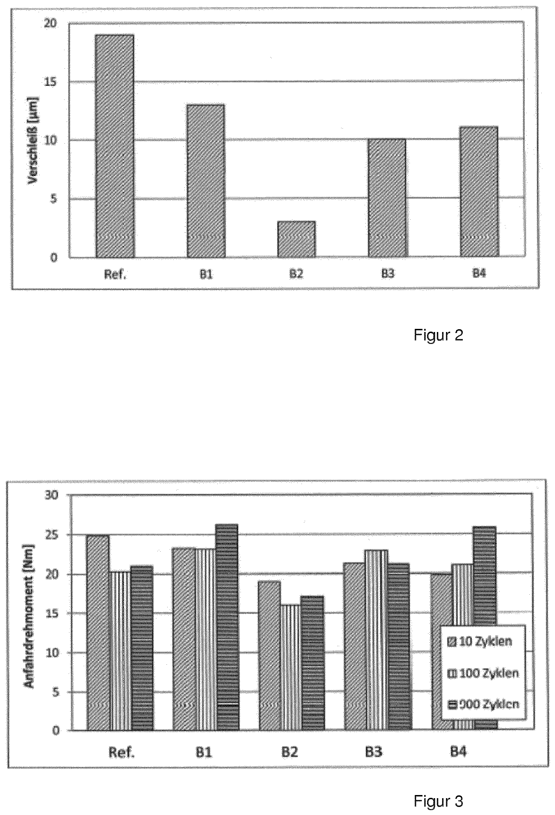

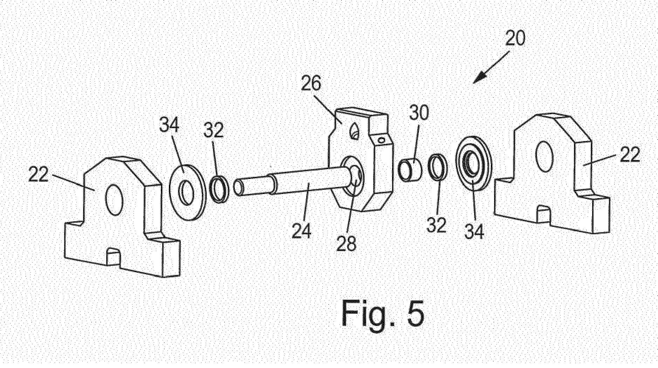

Figur 5 zeigt eine schematische Darstellung eines Prüfaufbaus 20, umfassend zwei Stützlager 22 für eine Welle 24 sowie eine Buchsenaufnahme 26, mit einer Öffnung 28 konzentrisch zur Welle 24 derart, dass die zu prüfende Buchse 30 in der Öffnung 28 der Buchsenaufnahme 26 angeordnet werden kann und dabei die Buchse 30 auf die Welle 24 aufgeschoben ist. Zusätzlich werden beidseits Dichtscheiben 32 und Flansche 34 vorgesehen. Die Welle 24 ist elektromotorisch antreibbar, wobei zwischen der Welle und dem elektromotorischen Antrieb eine Drehmomentmessvorrichtung in Form einer Drehmomentmesswelle vorgesehen ist. Die Buchsenaufnahme 26 lässt sich orthogonal zur Erstreckung der Welle belasten. Für die nachfolgend zu erörternden und ausgeführten Prüfungen wird hierbei eine konstante Last von 13 MPa (8 kN) unter zusätzlicher Zuführung eines niederviskosen Prüföls vorgesehen. Mittels dieses Prüfstands 20 lassen sich demgemäß Verschleiß, sowie der Drehmomentverlauf ermitteln und aufzeigen. Die Tests werden derart durchgeführt, dass die Drehzahl von 0 bis 500 Umdrehungen pro Minute und wieder zurück auf 0 mit konstanter Beschleunigung bzw. Verzögerung erhöht bzw. wieder zurückgefahren wird. Es werden dabei 900 derartiger Zyklen gefahren. Nach 900 Zyklen wird der Verschleiß in Form der Messung des Innendurchmessers der Buchse in der Lastebene ermittelt. Es wird ferner das Anfahrdrehmoment und das Drehmoment bei 100 Umdrehungen pro Minute jeweils nach 10, 100 bzw. 900 Zyklen erfasst. Die Messergebnisse sind in den Figuren 2 bis 4 dargestellt.

Es wurden zu prüfende Buchsen des Aufbaus gemäß Figur 1 aus einem erfindungsgemäßen Gleitlagerverbundwerkstoff hergestellt, d.h. in einem Biegerollverfahren auf zylindrische Buchsenform gebracht. Die Zusammensetzung des variierenden Gleitschichtmaterials ist in der nachfolgenden Tabelle dargestellt.

| Beispiel | Zusammensetzung in [Gew.-%] und Rest PEEK |
|---|---|
| Ref. | 10 Gew.-% C-Fasern, 10 Gew.-% Graphit, |
| | 10 Gew.-% TiO₂, 10 Gew.-% ZnS |
| B1 | 15 Gew.-% Siliziumoxid, 15 Gew.-% WS₂ |
| B2 | 15 Gew.-% Aluminiumsilikat , 15 Gew.-% WS₂ |
| B3 | 15 Gew.-% Kalziumsilikat (Wollastonit), |
| | 15 Gew.-% WS₂ |
| B4 | 10 Gew.-% Fe₂O₃ , 10 Gew.-% C-Fasern |

Bei dem als Ref. bezeichneten Gleitschichtmaterial handelt es sich um den eingangs erwähnten durch die Anmelderin vorbekannten Stand der Technik. B1 ist ein nicht erfindungsgemäßes Vergleichsbeispiel mit Siliziumoxid als festigkeitserhöhendem Hartstoff und Wolframdisulfid. B2 umfasst ein Gleitschichtmaterial nach der Erfindung mit Aluminiumsilikat und Wolframdisulfid als Festschmierstoff. B3 ist ein nicht erfindungsgemäßes Vergleichsbeispiel mit Kalziumsilikat (Wollastonit), welches typischerweise in unregelmäßigen Partikeln oder nadelig vorliegt, und Wolframdisulfid. Bei B4 handelt es sich um das Gleitschichtmaterial gemäß DE 10 2006 015 997 A1 mit Eisenoxidpartikeln und Kohlenstofffasern.

Figur 2 zeigt den Verschleiß, der nach 900 Zyklen unter konstanter Last von 13 MPa (8 kN) in der Lastebene der Prüfbuchse ermittelt wurde.

Figur 3 zeigt das mittels der Drehmomentmesswelle ermittelte Anfahrdrehmoment der jeweiligen Buchse nach 10, 100 und 900 Zyklen. Es handelt sich hierbei also um das Drehmoment, welches im Moment des Anfahrens, also unter Mangelschmierung, ermittelt wurde.

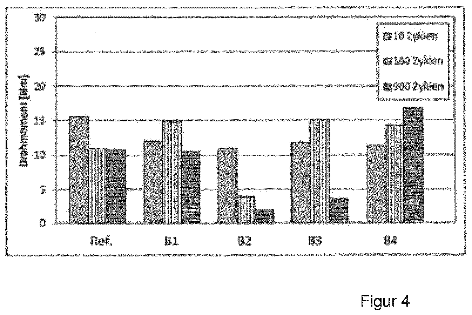

Sodann zeigt Figur 4 das jeweils bei 100 Umdrehungen pro Minute ermittelte Drehmoment, was immer noch einem Zustand im Übergang zwischen Festkörperreibung zu Mischreibung entspricht, wo also ein hydrodynamischer Schmierfilm noch nicht durchgehend sicher ausgebildet ist, was dann typischerweise erst bei 250 Umdrehungen pro Minute erreicht wird. Die in Figur 4 aufgetragenen Drehmomente wurden nach 10, 100 bzw. 900 Zyklen genommen.

Man erkennt insgesamt, dass der hartstofffreie und faserfreie erfindungsgemäße Werkstoff mit Aluminiumsilikat (Flugasche) und Wolframdisulfid als Festschmierstoff hinsichtlich Verschleiß, Anfahrdrehmoment und Drehmoment bei 100 Umdrehungen pro Minute den Vergleichswerkstoffen überlegen ist.

## Patentansprüche

1. Metall/Kunststoff-Gleitlagerverbundwerkstoff (2) zur Herstellung von Gleitlagerelementen für geschmierte Anwendungen, mit einer metallischen Stützschicht (4), insbesondere aus Stahl, und einer in gleitendem Kontakt mit einem Gleitpartner stehenden Gleitschicht (12) mit einem Gleitschichtmaterial (8) auf Basis eines fluorfreien Thermoplasten, insbesondere PAEK oder PEEK, und mit die tribologischen Eigenschaften verbessernden Füllstoffen, wobei das Gleitschichtmaterial (8) zu 5 - 40 Gew.-% einen Festschmierstoff, insbesondere in Form eines oder mehrerer der nachfolgenden Stoffe Zinksulfid, Wolframdisulfid, Bariumsulfat, Kaolin, Calciumfluorid, Graphit, Kreide oder Talk, umfasst und frei von faserförmigen Zusatzstoffen und von festigkeitserhöhenden Hartstoffen, die eine Mohshärte von größer als 5 aufweisen, ausgebildet ist, **dadurch gekennzeichnet, dass** das Gleitschichtmaterial (8) als Füllstoffe zu 1 - 40 Gew.-% Aluminiumsilikat in Form im wesentlichen sphärischer Partikel umfasst.

2. Gleitlagerverbundwerkstoff nach Anspruch 1, dass das Gleitschichtmaterial (8) zu wenigstens 8 Gew.-%, insbesondere zu wenigstens 10 Gew.-%, insbesondere zu wenigstens 12 Gew.-%,insbesondere zu wenigstens 15 Gew.-%, insbesondere zu höchstens 30 Gew.-%, insbesondere zu höchstens 20 Gew.-% Festschmierstoff umfasst.

3. Gleitlagerverbundwerkstoff nach Anspruch 1 oder 2, dass der Festschmierstoff eine Mohshärte von höchstens 4 aufweist.

4. Gleitlagerverbundwerkstoff nach einem oder mehreren der vorstehenden Ansprüche, **dadurch gekennzeichnet, dass** der Festschmierstoff von einem oder mehreren der nachfolgenden Stoffe Zinksulfid, Wolframdisulfid, Bariumsulfat, Kaolin, Calciumfluorid, Graphit, Kreide oder Talk gebildet ist.

5. Gleitlagerverbundwerkstoff nach einem oder mehreren der vorstehenden Ansprüche, **dadurch gekennzeichnet, dass** Gleitschichtmaterial (8) in einer auf der metallischen Stützschicht (4) ausgebildeten porösen Trägerschicht (6), insbesondere in einer aus metallischen Partikeln aufgesinterten Trägerschicht (6) verankert ist.

6. Gleitlagerverbundwerkstoff nach einem oder mehreren der Ansprüche 1-4, **dadurch gekennzeichnet, dass** das Gleitschichtmaterial in einer mikrostrukturiert ausgebildeten Oberfläche der metallischen Stützschicht verankert ist.

7. Gleitlagerverbundwerkstoff nach einem oder mehreren der Ansprüche 1-4, **dadurch gekennzeichnet, dass** das Gleitschichtmaterial mittels einer klebenden Haftvermittlungsschicht auf die metallische Stützschicht aufgeklebt ist.

8. Gleitlagerverbundwerkstoff nach einem oder mehreren der vorstehenden Ansprüche, dass das Gleitschichtmaterial (8) zu wenigstens 5 Gew.-%, insbesondere zu wenigstens 10 Gew.-%, insbesondere zu höchstens 30 Gew.-%, insbesondere zu höchstens 25 Gew.-%, insbesondere zu höchstens 20 Gew.-% Aluminiumsilikat umfasst.

9. Gleitlagerverbundwerkstoff nach einem oder mehreren der vorstehenden Ansprüche, dass das Aluminiumsilikat zu wenigstens 4 Gew.-%, insbesondere zu wenigstens 5 Gew.-%, insbesondere zu wenigstens 6 Gew.-%, Kalziumoxid umfasst.

10. Gleitlagerverbundwerkstoff nach einem oder mehreren der vorstehenden Ansprüche, dass das Aluminiumsilikat zu 62 - 68 Gew.-% SiO₂, zu 17 - 21 Gew.-% Al₂O₃ und zu 5 - 8 Gew.-% CaO umfasst.

11. Gleitlagerverbundwerkstoff nach einem oder mehreren der vorstehenden Ansprüche, dass die Partikelgröße der im Wesentlichen sphärischen Aluminiumsilikat Partikel einen D50-Wert von höchstens 20 µm, insbesondere von höchstens 15 µm, insbesondere von höchstens 10 µm aufweist, insbesondere zwischen 1 und 10 µm, insbesondere zwischen 2 und 10 µm aufweist.

12. Gleitlagerverbundwerkstoff nach einem oder mehreren der vorstehenden Ansprüche, dass die Partikelgröße der im Wesentlichen sphärischen Aluminiumsilikat Partikel einen D90-Wert von höchstens 100 µm, insbesondere von höchstens 80 µm, insbesondere von höchstens 60 µm aufweist.

13. Gleitlagerverbundwerkstoff nach einem oder mehreren der vorstehenden Ansprüche, dass die Schichtdicke der metallischen Stützschicht (4) 0,5 - 5 mm beträgt, dass die Schichtdicke der porösen Trägerschicht (6) wenigstens 0,05 mm, insbesondere wenigstens 0,1 mm, insbesondere wenigstens 0,2 mm und höchstens 0,6 mm, insbesondere höchstens 0,5 mm beträgt, und dass der Überstand des Gleitschichtmaterials über die poröse Trägerschicht wenigstens 30 µm, insbesondere wenigstens 50 µm, insbesondere wenigstens 100 µm und höchstens 600 µm, insbesondere höchstens 500 µm, insbesondere höchstens 400 µm beträgt.

14. Gleitlagerverbundwerkstoff nach einem oder mehreren der vorstehenden Ansprüche, dass das Gleitschichtmaterial (8) auf Basis von PEEK als fluorfreier Thermoplast ausgebildet ist.

15. Gleitlagerverbundwerkstoff nach einem oder mehreren der vorstehenden Ansprüche, dass das Gleitschichtmaterial (8) PTFE-frei ausgebildet ist.

16. Gleitlagerverbundwerkstoff nach einem oder mehreren der vorstehenden Ansprüche, dass das Gleitschichtmaterial (8) auf Basis von PAEK, insbesondere PEEK, als fluorfreier Thermoplast ausgebildet ist und zu 10 - 20 Gew.-%, insbesondere zu 12 - 18 Gew.-%, insbesondere zu 13 - 17 Gew.-%, insbesondere zu 14 - 16 Gew.-% Aluminiumsilikat und zu 13 - 17 Gew.-% Festschmierstoff in Form eines oder mehrerer der nachfolgenden Stoffe Zinksulfid, Wolframdisulfid, Bariumsulfat, Kaolin, Calciumsulfid, Graphit, Kreide oder Talk umfasst.

17. Verwendung des Metall/Kunststoff-Gleitlagerverbundwerkstoffs (2) nach einem oder mehreren der vorstehenden Ansprüche zur Herstellung von Gleitlagerelementen für Einspritzpumpen für hochaufladende Verbrennungsmotoren, insbesondere für Common Rail Einspritzpumpen, bei Kraftfahrzeugen.

18. Gleitlagerelement für eine Einspritzpumpe für einen hochaufladenden Verbrennungsmotor, insbesondere für eine Common Rail Einspritzpumpe, bei Kraftfahrzeugen, hergestellt aus einem Metall/Kunststoff-Gleitlagerverbundwerkstoff (2) nach einem oder mehreren der Ansprüche 1-16.

19. Verwendung eines Gleitlagerelements hergestellt aus einem Metall/Kunststoff-Gleitlagerverbundwerkstoff (2) nach einem oder mehreren der Ansprüche 1-16 zur Lagerung der Antriebswelle einer Einspritzpumpe für hochaufladende Verbrennungsmotoren, insbesondere einer Common Rail Einspritzpumpe, oder zur Lagerung von Wellen oder Hebeln bei Kraftfahrzeuggetrieben, - bremsen oder bei Hydromotoren.

## Claims

1. Metal/plastic slide bearing compound material (2) for producing slide bearing elements for lubricated applications, with a metallic support layer (4), in particular made of steel, and a slide layer (12) in sliding contact with the slide partner, with a slide layer material (8) on a basis of a fluoride-free thermoplastic, in particular PAEK or PEEK, and with fillers that improve the tribological features, wherein the slide layer material (8) comprises 5 - 40 wt.% of a solid lubricant, in particular in the form of one or more of the following materials of zinc sulphide, tungsten disulphide, barium sulfate, kaolin, calcium fluoride, graphite, chalk or talcum, and is free from fibrous additives and from solidity-enhancing hard materials that have a Mohs' hardness of more than 5, **characterised in that** the slide layer material (8) comprises aluminium silicate in the form of substantially spherical particles as fillers at 1 - 40 wt.%.

2. Slide bearing compound material according to claim 1, with the slide layer material (8) comprising at least 8 wt.%, in particular at least 10 wt.%, in particular at least 12 wt.%, in particular at least 15 wt.%, in particular no more than 30 wt.%, in particular no more than 20 wt.% of a solid lubricant.

3. Slide bearing compound material according to claim 1 or 2, with the solid lubricant having a Mohs' hardness of no more than 4.

4. Slide bearing compound material according to one or more of the preceding claims, **characterised in that** the solid lubricant is formed by one or more of the following materials of zinc sulphide, tungsten disulphide, barium sulfate, kaolin, calcium fluoride, graphite, chalk or talcum.

5. Slide bearing compound material according to one or more of the preceding claims, **characterised in that** slide layer material (8) is anchored in a porous carrier layer (6) formed on the metallic support layer (4), in particular as a carrier layer (6) sintered from metallic particles.

6. Slide material compound material according to one or more of the claims 1-4, **characterised in that** the slide layer material is anchored in a micro-structurally formed surface of the metallic support layer.

7. Slide layer compound material according to one or more of the claims 1-4, **characterised in that** the slide layer material is glued onto the metallic support layer by means of an adhering adhesive layer.

8. Slide bearing compound material according to one or more of the preceding claims, with the slide layer material (8) comprising at least 5 wt.%, in particular at least 10 wt.%, in particular no more than 30 wt.%, in particular no more than 25 wt.%, in particular no more than 20 wt.% of aluminium silicate.

9. Slide bearing compound material according to one or more of the preceding claims, with the aluminium silicate comprising at least 4 wt.%, in particular at least 5 wt.%, in particular at least 6 wt.% of calcium oxide.

10. Slide bearing compound material according to one or more of the preceding claims, with the aluminium silicate comprising 62 - 68 wt.% of SiO₂, 17 - 21 wt.% of Al₂O₃, and 5 - 8 wt.% of CaO.

11. Slide bearing compound material according to one or more of the preceding claims, with the particle size of the substantially spherical aluminium silicate particles having a D50 value of no more than 20 µm, in particular of no more than 15 µm, in particular of no more than 10 µm, in particular of between 1 and 10 µm, in particular between 2 and 10 µm.

12. Slide bearing compound material according to one or more of the preceding claims, with the particle size of the substantially spherical aluminium silicate particles having a D90 value of no more than 100 µm, in particular of no more than 80 µm, in particular of no more than 60 µm.

13. Slide bearing compound material according to one or more of the preceding claims, with the layer thickness of the metallic support layer (4) being 0.5 - 5 mm, with the layer thickness of the porous carrier layer (6) being at least 0.05 mm, in particular at least 0.1 mm, in particular at least 0.2 mm and no more than 0.6 mm, in particular no more than 0.5 mm, and in that the protrusion of the slide layer material over the porous carrier layer is at least 30 µm, in particular at least 50 µm, in particular at least 100 µm and no more than 600 µm, in particular no more than 500 µm, in particular no more than 400 µm.

14. Slide bearing compound material according to one or more of the preceding claims, with the slide layer material (8) being formed on the basis of PEEK as a fluoride-free thermoplastic.

15. Slide bearing compound material according to one or more of the preceding claims, with the slide layer material (8) being formed PTFE-free.

16. Slide bearing compound material according to one or more of the preceding claims, with the slide layer material (8) being formed on the basis of PAEK, in particular PEEK, as a fluoride-free thermoplastic, and comprises 10 - 20 wt.%, in particular 12 -18 wt.%, in particular 13 - 17 wt.%, in particular 14 - 16 wt.% of aluminium silicate, and 13 - 17 wt.% is a solid lubricant in the form of one or more of the following materials of zinc sulphide, tungsten disulphide, barium sulfate, kaolin, calcium sulphide, graphite, chalk or talcum.

17. Use of the metal/plastic slide bearing compound material (2) according to one or more of the preceding claims for producing slide bearing elements for injection pumps for highly charging combustion engines, in particular for common rail injection pumps in motor vehicles.

18. Slide bearing element for an injection pump for a highly charging combustion engine, in particular for a common rail injection pump, in motor vehicles, manufactured from a metal/plastic slide bearing compound material (2) according to one or more of the claims 1-16.

19. Use of a slide bearing element manufactured from a metal/plastic slide bearing compound material (2) according to one or more of the claims 1-16 for mounting the driveshaft of an injection pump for highly charging combustion engines, in particular a common rail injection pump, or for mounting shafts or levers of motor vehicle gearboxes, brakes, or in hydro motors.

## Revendications

1. Matériau composite de palier lisse en métal/plastique (2) pour la fabrication d'éléments de palier lisse pour des applications lubrifiées, comportant une couche de support métallique (4), en particulier en acier, et une couche de glissement (12) en contact de glissement avec un partenaire de glissement, comportant un matériau de couche de glissement (8) à base de thermoplastiques sans fluor, en particulier PAEK ou PEEK, et des matières de charge améliorant les propriétés tribologiques, dans lequel le matériau de couche de glissement (8) comprend de 5 à 40 % en poids d'un lubrifiant solide, en particulier sous la forme d'un ou plusieurs des matériaux suivants parmi le sulfure de zinc, le disulfure de tungstène, le sulfate de baryum, le kaolin, le fluorure de calcium, le graphite, la craie ou le talc, et est formé sans additif fibreux et de matériaux durs augmentant la dureté, qui présentent une dureté de Mohs supérieure à 5, **caractérisé en ce que** le matériau de couche de glissement (8) en tant que matière de charge comprend de 1 à 40 % en poids de silicate d'aluminium sous forme de particules sensiblement sphériques.

2. Matériau composite de palier lisse selon la revendication 1, **caractérisé en ce que** le matériau de couche de glissement (8) comprend au moins 8 % en poids, en particulier au moins 10 % en poids, en particulier au moins 12 % en poids, en particulier au moins 15 % en poids, en particulier au plus 30 % en poids, en particulier au plus 20 % en poids de lubrifiant solide.

3. Matériau composite de palier lisse selon la revendication 1 ou 2, **caractérisé en ce que** le lubrifiant solide présente une dureté de Mohs d'au plus 4.

4. Matériau composite de palier lisse selon une ou plusieurs des revendications précédentes, **caractérisé en ce que** le lubrifiant solide est formé d'un ou plusieurs des matériaux suivants parmi le sulfure de zinc, le disulfure de tungstène, le sulfate de baryum, le kaolin, le fluorure de calcium, le graphite, la craie ou le talc.

5. Matériau composite de palier lisse selon une ou plusieurs des revendications précédentes, **caractérisé en ce que** le matériau de couche de glissement (8) est ancré dans une couche de soutien poreuse (6) formée sur la couche de support métallique (4), en particulier dans une couche de soutien (6) frittée de particules métalliques.

6. Matériau composite de palier lisse selon une ou plusieurs des revendications 1 à 4, **caractérisé en ce que** le matériau de couche de glissement est ancré dans une surface réalisée micro-structurée de la couche de support métallique.

7. Matériau composite de palier lisse selon une ou plusieurs des revendications 1 à 4, **caractérisé en ce que** le matériau de couche de glissement est collé au moyen d'une couche de liaison adhésive sur la couche de support métallique.

8. Matériau composite de palier lisse selon une ou plusieurs des revendications précédentes, **caractérisé en ce que** le matériau de couche de glissement (8) comprend au moins 5 % en poids, en particulier au moins 10 % en poids, en particulier au plus 30 % en poids, en particulier au plus 25 % en poids, en particulier au plus 20 % en poids de silicate d'aluminium.

9. Matériau composite de palier lisse selon une ou plusieurs des revendications précédentes, **caractérisé en ce que** le silicate d'aluminium comprend au moins 4 % en poids, en particulier au moins 5 % en poids, en particulier au moins 6 % en poids d'oxyde de calcium.

10. Matériau composite de palier lisse selon une ou plusieurs des revendications précédentes, **caractérisé en ce que** le silicate d'aluminium comprend de 62 à 68 % en poids de SiO₂, de 17 à 21 % en poids d'Al₂O₃ et de 5 à 8 % en poids de CaO.

11. Matériau composite de palier lisse selon une ou plusieurs des revendications précédentes, **caractérisé en ce que** la taille de particule de la particule de silicate d'aluminium sensiblement sphérique présente une valeur D50 d'au plus 20 µm, en particulier d'au plus 15 µm, en particulier d'au plus 10 µm, en particulier entre 1 et 10 µm, en particulier entre 2 et 10 µm.

12. Matériau composite de palier lisse selon une ou plusieurs des revendications précédentes, **caractérisé en ce que** la taille de particule de la particule de silicate d'aluminium sensiblement sphérique présente une valeur D90 d'au plus 100 µm, en particulier d'au plus 80 µm, en particulier d'au plus 60 µm.

13. Matériau composite de palier lisse selon une ou plusieurs des revendications précédentes, **caractérisé en ce que** l'épaisseur de couche de la couche de support métallique (4) est de 0,5 à 5 mm, **en ce que** l'épaisseur de couche de la couche de soutien poreuse (6) est d'au moins 0,05 mm, en particulier d'au moins 0,1 mm, en particulier d'au moins 0,2 mm et d'au plus 0,6 mm, en particulier d'au plus 0,5 mm, et **en ce que** la saillie du matériau de couche de glissement sur la couche de support poreuse est d'au moins 30 µm, en particulier d'au moins 50 µm, en particulier d'au moins 100 µm et en particulier d'au plus 600 µm, en particulier d'au plus 500 µm, en particulier d'au plus 400 µm.

14. Matériau composite de palier lisse selon une ou plusieurs des revendications précédentes, **caractérisé en ce que** le matériau de couche de glissement (8) est formé à base de PEEK en tant que thermoplastique sans fluor.

15. Matériau composite de palier lisse selon une ou plusieurs des revendications précédentes, **caractérisé en ce que** le matériau de couche de glissement (8) est formé exempt de PTFE.

16. Matériau composite de palier lisse selon une ou plusieurs des revendications précédentes, **caractérisé en ce que** le matériau de couche de glissement (8) à base de PAEK, en particulier la PEEK, est formé en tant que thermoplastique sans fluor et comprend de 10 à 20 % en poids, en particulier de 12 à 18 % en poids, en particulier de 13 à 17 % en poids, en particulier de 14 à 16 % en poids de silicate d'aluminium et de 13 à 17 % en poids de lubrifiant solide sous la forme d'un ou plusieurs des matériaux suivants parmi le sulfure de zinc, le disulfure de tungstène, le sulfate de baryum, le kaolin, le sulfure de calcium, le graphite, la craie ou le talc.

17. Utilisation du matériau composite de palier lisse en métal/plastique (2) selon une ou plusieurs des revendications précédentes, pour la fabrication d'éléments de palier lisse pour des pompes à carburant pour un moteur à combustion à forte charge, en particulier pour des pompes d'injection directe à rampe commune, dans des véhicules automobiles.

18. Elément de palier lisse pour une pompe d'injection pour un moteur à combustion à forte charge, en particulier pour une pompe d'injection directe à rampe commune, pour des véhicules automobiles, fabriqué à partir d'un matériau composite de palier lisse en métal/plastique (2) selon une ou plusieurs des revendications 1 à 16.

19. Utilisation d'un élément de palier lisse fabriqué à partir d'un matériau composite de palier lisse en métal/plastique (2) selon une ou plusieurs des revendications 1 à 16 pour le montage de l'arbre d'entraînement d'une pompe d'injection pour moteur à combustion à forte charge, en particulier une pompe d'injection directe à rampe commune, ou pour le montage d'arbres ou de leviers de transmissions ou de freins de véhicules automobiles, ou de moteurs hydrauliques.
